(19) **Europäisches Patentamt / European Patent Office / Office européen des brevets**

(11) **EP 3 553 996 B1**

(12) **FASCICULE DE BREVET EUROPEEN**

(45) Date de publication et mention de la délivrance du brevet:
**18.05.2022 Bulletin 2022/20**

(21) Numéro de dépôt: **19164109.1**

(22) Date de dépôt: **20.03.2019**

(51) Classification Internationale des Brevets (IPC):
**H04L 9/00** *(2022.01)*

(52) Classification Coopérative des Brevets (CPC):
**H04L 9/002;** H04L 2209/046

(54) **PROCÉDÉ DE DÉTERMINATION DE L INVERSE MULTIPLICATIF D'UNE DONNÉE D ENTRÉE, PROGRAMME D ORDINATEUR ET DISPOSITIF DE TRAITEMENT CRYPTOGRAPHIQUE ASSOCIÉ**

VERFAHREN ZUR BESTIMMUNG DES MULTIPLIKATIVEN KEHRWERTS VON EINGANGSDATEN, COMPUTERPROGRAMM UND ENTSPRECHENDE VORRICHTUNG ZUR KRYPTOGRAPHISCHEN BEARBEITUNG

METHOD FOR DETERMINING THE MULTIPLICATIVE INVERSE OF AN ITEM OF INPUT DATA, CORRESPONDING COMPUTER PROGRAM AND ASSOCIATED CRYPTOGRAPHIC PROCESSING DEVICE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **10.04.2018 FR 1853136**

(43) Date de publication de la demande:
**16.10.2019 Bulletin 2019/42**

(73) Titulaire: **IDEMIA France
92400 Courbevoie (FR)**

(72) Inventeurs:
• **GIRAUD, Christophe
  92400 Courbevoie (FR)**
• **BATTISTELLO, Alberto
  92400 Courbevoie (FR)**

(74) Mandataire: **Chauvin, Karen Laurence
Idemia
2, place Samuel de Champlain
92400 Courbevoie (FR)**

(56) Documents cités:
**EP-A1- 2 296 307     CN-B- 103 001 762
FR-A1- 3 045 883**

• **OSWALD E ET AL: "Secure and Efficient Masking of AES - A Mission Impossible? (version 1.0)", INTERNET CITATION, 4 juin 2004 (2004-06-04), XP002315432, Extrait de l'Internet: URL:http://eprint.iacr.org/2004/134.pdf [extrait le 2005-01-26]**

**Description**

La présente invention concerne de manière générale la détermination de l'inverse d'une donnée dans le cadre d'un traitement cryptographique de données.

Elle concerne plus particulièrement un procédé de détermination de l'inverse multiplicatif d'une donnée d'entrée, un programme d'ordinateur et un dispositif de traitement cryptographique associé.

ARRIERE-PLAN TECHNOLOGIQUE

Les attaques par canal auxiliaire se basent sur l'observation de paramètres physiques (comme le temps d'exécution ou la consommation électrique) pendant la mise en œuvre d'un processus de cryptographie afin de pouvoir révéler les données secrètes.

Le standard de chiffrement avancé (ou AES pour « Advanced Encryption Standard » selon l'appellation d'origine anglo-saxonne) est en particulier visé par de telles attaques.

Afin de contrecarrer ces attaques, il est connu de masquer de manière aléatoire les données secrètes et de mettre en œuvre le processus cryptographique sur les données masquées.

Une opération de masquage au moyen d'une opération de « ou exclusif » est le plus fréquemment utilisée car ce masquage présente l'avantage d'être linéaire par rapport à la majorité des opérations utilisées (comme c'est le cas dans le standard de chiffrement avancé).

Cependant, il est parfois utilisé une opération d'inversion, par exemple dans le cas du standard de chiffrement avancé, qui n'est quant à elle pas linéaire par rapport à l'opération de « ou exclusif ».

Il a déjà été proposé un procédé de détermination de l'inverse multiplicatif d'une donnée d'entrée dans lequel une opération d'inversion multiplicative est appliquée au produit d'un masque multiplicatif et d'une donnée de somme égale à la combinaison par « ou exclusif » de la donnée d'entrée, d'un premier masque additif et d'un deuxième masque additif.

Ces masques additifs sont tels que la combinaison par « ou exclusif » du premier masque additif et du second masque additif est nulle lorsque la donnée d'entrée est non nulle, et que cette combinaison est non nulle lorsque la donnée d'entrée est nulle.

Ainsi, grâce aux propriétés des deux masques additifs, l'inverse multiplicatif de la donnée d'entrée est obtenu (au masquage près) lorsque la donnée d'entrée est non nulle. En revanche, lorsque la donnée d'entrée est nulle, la donnée de somme n'est quant à elle pas nulle (grâce aux propriétés des masques additifs) de sorte que le masque multiplicatif reste efficace. (En effet, le masque multiplicatif perdrait son effet s'il était multiplié par une donnée de somme nulle.)

Le document EP2296307A1 (OBERTHUR TECHNOLOGIES [FR]) 16.03.2011 propose une solution à ce problème.

OBJET DE L'INVENTION

Dans ce contexte, la présente invention propose un procédé de détermination de l'inverse multiplicatif d'une donnée d'entrée mis en œuvre dans un dispositif de traitement cryptographique, la donnée d'entrée étant préalablement masquée par un masque d'entrée au moyen d'une opération de « ou exclusif », dans lequel une opération d'inversion multiplicative est appliquée à une donnée produit d'un masque multiplicatif et d'une somme égale à la combinaison par «ou exclusif» de la donnée d'entrée, d'un premier masque additif et d'un deuxième masque additif, la combinaison par « ou exclusif » du premier masque additif et du second masque additif étant nulle lorsque la donnée d'entrée est non nulle et non nulle lorsque la donnée d'entrée est nulle, le procédé comportant également les étapes suivantes :

- initialisation d'une donnée aléatoire comprenant au moins deux bits,
- construction d'une donnée de table par remplissage de ladite donnée de table au moyen de la donnée aléatoire, ladite donnée de table comprenant un bit pour chaque valeur possible de la donnée d'entrée, chaque bit de la donnée aléatoire correspondant ainsi au moins un bit de la donnée de table,
- inversion du bit de la donnée de table associé à la valeur du masque d'entrée,
- construction du premier masque additif à partir du bit de la donnée aléatoire correspondant au bit de la donnée de table associé à la valeur de la donnée d'entrée masquée, et
- construction du deuxième masque additif à partir du bit de la donnée de table associé à la valeur de la donnée d'entrée masquée, et

dans lequel la détermination de la donnée produit est réalisée au moyen des étapes suivantes :

- détermination d'une première donnée par masquage au moyen d'une opération de « ou exclusif » entre la donnée d'entrée masquée et un masque parmi le premier masque additif et le second masque additif,
- détermination d'une deuxième donnée par masquage au moyen du masque multiplicatif de la première donnée,
- détermination d'une troisième donnée par une opération de « ou exclusif» entre le masque d'entrée et l'autre masque parmi le deuxième masque additif et le premier masque additif,
- détermination d'une quatrième donnée par masquage au moyen du masque multiplicatif de la troisième donnée,
- obtention de ladite donnée produit au moyen d'une opération de « ou exclusif » entre la deuxième donnée et la quatrième donnée.

La définition de la donnée de table à partir d'une donnée aléatoire permet de renforcer la sécurité lors de la détermination de l'inverse multiplicatif. En effet, un nombre aléatoire de bits de la donnée de table a la même valeur puisque la donnée de table est construite à partir de la donnée aléatoire R (qui elle est générée aléatoirement).

De plus, par construction, le premier masque additif dépend de la donnée aléatoire et de la donnée masquée. Cette construction permet de changer ce premier masque additif d'une utilisation à une autre du procédé. Cela permet de renforcer l'impact des étapes de masquage du procédé.

On conserve au demeurant les propriétés susmentionnées des masques additifs et leurs avantages. En effet, lorsque la donnée d'entrée masquée diffère du masque d'entrée (c'est-à-dire que la donnée d'entrée est non nulle), les deux masques additifs sont identiques par construction. En revanche, lorsque la donnée d'entrée masquée est égale au masque d'entrée (c'est-à-dire que la donnée d'entrée est nulle), le deuxième masque additif reprend le bit inversé dans la donnée de table de sorte que les deux masques additifs diffèrent (leur somme valant alors un).

D'autres caractéristiques non limitatives et avantageuses du procédé de détermination de l'inverse multiplicatif conforme à l'invention, prises individuellement ou selon toutes les combinaisons techniquement possibles, sont les suivantes :

- Il est également proposé, lorsqu'un premier masque d'entrée est remplacé par un deuxième masque d'entrée, une étape de mise à jour de la donnée de table de manière à ce que :
- le bit associé au premier masque d'entrée soit remis à la valeur correspondante dans la donnée aléatoire, et que
- le bit associé au deuxième masque d'entrée soit inversé ;
- l'étape de remplissage est mise en œuvre par recopie de la donnée aléatoire une pluralité de fois ;
- la combinaison par « ou exclusif » du premier masque additif et du second masque additif est égale à un lorsque la donnée d'entrée est nulle ;
- la détermination de la première donnée est déterminée par masquage au moyen d'une opération de « ou exclusif » entre la donnée d'entrée masquée et le premier masque additif ;
- il est en outre proposé les étapes suivantes :
- détermination d'une cinquième donnée par masquage au moyen d'une opération de « ou exclusif » entre le premier masque additif et la troisième donnée,
- détermination d'une sixième donnée par masquage, au moyen de l'inverse du masque multiplicatif, de la cinquième donnée,
- détermination d'une septième donnée au moyen d'une opération de « ou exclusif » entre le résultat de ladite opération d'inversion de la donnée produit et la sixième donnée, et
- obtention de l'inverse multiplicatif de la donnée d'entrée par masquage, au moyen du masque multiplicatif, de la septième donnée ;
- la détermination de la première donnée est déterminée par masquage au moyen d'une opération de « ou exclusif » entre la donnée d'entrée masquée et le deuxième masque additif;
- Il est en outre proposé les étapes suivantes :
- détermination d'une cinquième donnée par masquage au moyen d'une opération de « ou exclusif » entre le deuxième masque additif et la troisième donnée,
- détermination d'une sixième donnée par masquage, au moyen de l'inverse du masque multiplicatif, de la cinquième donnée,
- détermination d'une septième donnée au moyen d'une opération de « ou exclusif » entre le résultat de ladite opération d'inversion de la donnée produit et la sixième donnée, et
- obtention de l'inverse multiplicatif de la donnée d'entrée par masquage, au moyen du masque multiplicatif, de la septième donnée ;
- le masque d'entrée et le masque multiplicatif sont générés aléatoirement ; et
- la donnée aléatoire a une longueur d'au moins un octet.

L'invention propose également un programme d'ordinateur comprenant des instructions exécutables par un processeur et adaptées à mettre en œuvre le procédé conforme à l'invention lorsque ces instructions sont exécutées par le processeur.

L'invention propose également un dispositif de traitement cryptographique conçu pour déterminer l'inverse multiplicatif d'une donnée d'entrée masquée par un masque d'entrée au moyen d'une opération de « ou exclusif », le dispositif comprend :

- un module de production d'un premier masque additif et d'un deuxième masque additif configuré de sorte que la combinaison par « ou exclusif » du premier masque additif et du second masque additif est nulle lorsque la donnée d'entrée est non nulle et est non nulle lorsque la donnée d'entrée est nulle,
- un module d'inversion conçu pour appliquer une opération d'inversion multiplicative à une donnée produit d'un masque multiplicatif et d'une somme égale à la combinaison par «ou exclusif» de la donnée d'entrée, du premier masque additif et du deuxième masque additif,

le module de production comprenant :

- un bloc d'initialisation d'une donnée aléatoire comprenant au moins deux bits,
- un bloc de construction d'une donnée de table par remplissage de ladite donnée de table au moyen de la donnée aléatoire, ladite donnée de table comprenant un bit pour chaque valeur possible de la donnée d'entrée, chaque bit de la donnée aléatoire correspondant ainsi à au moins un bit de la donnée de table,
- un bloc d'inversion du bit de la donnée de table associé à la valeur du masque d'entrée,
- un bloc de construction du premier masque additif à partir du bit de la donnée aléatoire correspondant au bit de la donnée de table associé à la valeur de la donnée d'entrée masquée, et
- un bloc de construction du deuxième masque additif à partir du bit de la donnée de table associé à la valeur de la donnée d'entrée masquée, et

dans lequel le module d'inversion est conçu pour :

- déterminer une première donnée par masquage au moyen d'une opération de « ou exclusif » entre la donnée d'entrée masquée et un masque parmi le premier masque additif et le second masque additif,
- déterminer une deuxième donnée par masquage au moyen du masque multiplicatif de la première donnée,
- déterminer une troisième donnée par une opération de « ou exclusif » entre le masque d'entrée et l'autre masque parmi le deuxième masque additif et le premier masque additif,
- déterminer une quatrième donnée par masquage au moyen du masque multiplicatif de la troisième donnée,
- obtenir ladite donnée produit au moyen d'une opération de « ou exclusif » entre la deuxième donnée et la quatrième donnée.

D'autres caractéristiques non limitatives et avantageuses du dispositif de traitement cryptographique conforme à l'invention, prises individuellement ou selon toutes les combinaisons techniquement possibles, sont les suivantes :

- le dispositif de traitement cryptographique comprend également un module de détermination de la donnée produit, ledit module comprenant :
- un bloc de masquage au moyen d'une opération de « ou exclusif » de la donnée d'entrée masquée afin de déterminer la première donnée, (ce masquage pouvant être réalisé au moyen du premier masque additif ou du deuxième masque additif)
- un bloc de masquage au moyen du masque multiplicatif de la première donnée afin de déterminer la deuxième donnée,
- un bloc de masquage par une opération de « ou exclusif » du masque d'entrée afin de déterminer la troisième donnée, (ce masquage pouvant être réalisé au moyen du deuxième masque additif ou du premier masque additif)
- un bloc de masquage au moyen du masque multiplicatif de la troisième donnée afin de déterminer la quatrième donnée, et
- un bloc d'obtention de la donnée produit au moyen d'une opération de « ou exclusif » entre la deuxième donnée et la quatrième donnée ; et
- le dispositif de traitement cryptographique comprend également un module de détermination de l'inverse multiplicatif de la donnée d'entrée, ledit module comprenant :

- un bloc de masquage au moyen d'une opération de « ou exclusif » de la troisième donnée afin de déterminer une cinquième donnée,
- un bloc de masquage au moyen de l'inverse du masque multiplicatif de la cinquième donnée afin de déterminer une sixième donnée,

4

- un bloc de combinaison par une opération de « ou exclusif » entre le résultat de ladite opération d'inversion de la donnée produit et la sixième donnée afin de déterminer une septième donnée, et
- un bloc d'obtention de l'inverse multiplicatif de la donnée d'entrée par masquage, au moyen du masque multiplicatif, de la septième donnée.

DESCRIPTION DETAILLEE D'UN EXEMPLE DE REALISATION

La description qui va suivre en regard des dessins annexés, donnés à titre d'exemples non limitatifs, fera bien comprendre en quoi consiste l'invention et comment elle peut être réalisée.

Sur les dessins annexés :

- la figure 1 représente schématiquement les éléments principaux d'une entité électronique au sein de laquelle est mise en œuvre l'invention ;
- la figure 2 représente, sous forme de logigramme, un premier exemple de procédé conforme à l'invention ;
- la figure 3 représente un premier exemple d'une donnée aléatoire conforme à l'invention ;
- la figure 4 représente un exemple d'une donnée de table initiale conforme à l'invention ;
- la figure 5 représente un premier exemple d'une donnée de table conforme à l'invention ;
- la figure 6 représente un deuxième exemple d'une donnée aléatoire conforme à l'invention ;
- la figure 7 représente un deuxième exemple d'une donnée de table conforme à l'invention ;
- la figure 8 représente un troisième exemple d'une donnée aléatoire conforme à l'invention ;
- la figure 9 représente un troisième exemple d'une donnée de table conforme à l'invention ;
- la figure 10 représente un quatrième exemple d'une donnée aléatoire conforme à l'invention ;
- la figure 11 représente un quatrième exemple d'une donnée de table conforme à l'invention ; et
- la figure 12 représente, sous forme de logigramme, un deuxième exemple de procédé conforme à l'invention.

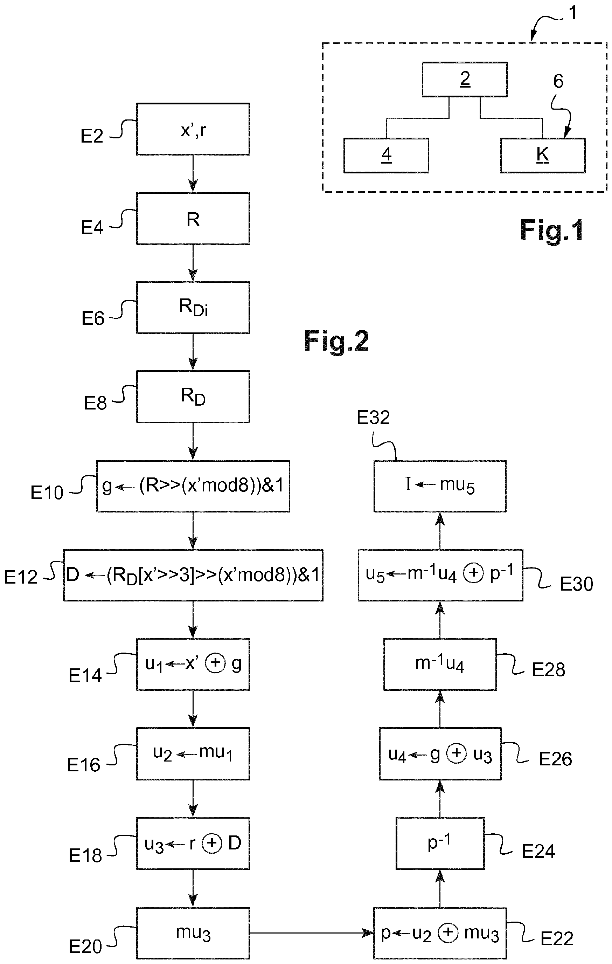

La figure 1 représente schématiquement les éléments principaux d'une entité électronique 1 au sein de laquelle est mise en œuvre l'invention. Cette entité électronique 1 est par exemple une carte à microcircuit, par exemple une carte à circuit intégré universelle (ou UICC pour "*Universal Integrated Circuit Card*"). En variante, il pourrait s'agir d'un élément sécurisé (ou SE pour "*Secure Element*") - par exemple un microcontrôleur sécurisé, d'un dispositif électronique portatif (ou "*hand-held electronic device*" selon l'appellation anglo-saxonne couramment utilisée) - par exemple un terminal de communication ou un passeport électronique, ou d'un ordinateur.

L'entité électronique 1 comprend un processeur 2 (ici un microprocesseur), une mémoire vive 4 et une mémoire non-volatile réinscriptible 6 (par exemple de type EEPROM pour "*Electrically Erasable and Programmable Read-Only Memory*"). L'entité électronique 1 pourrait éventuellement comprendre en outre une mémoire morte. La mémoire vive 4 et la mémoire non-volatile réinscriptible 6 (ainsi que le cas échéant la mémoire morte) sont chacune liées au processeur 2 de sorte que le processeur 2 peut lire ou écrire des données dans chacune de ces mémoires.

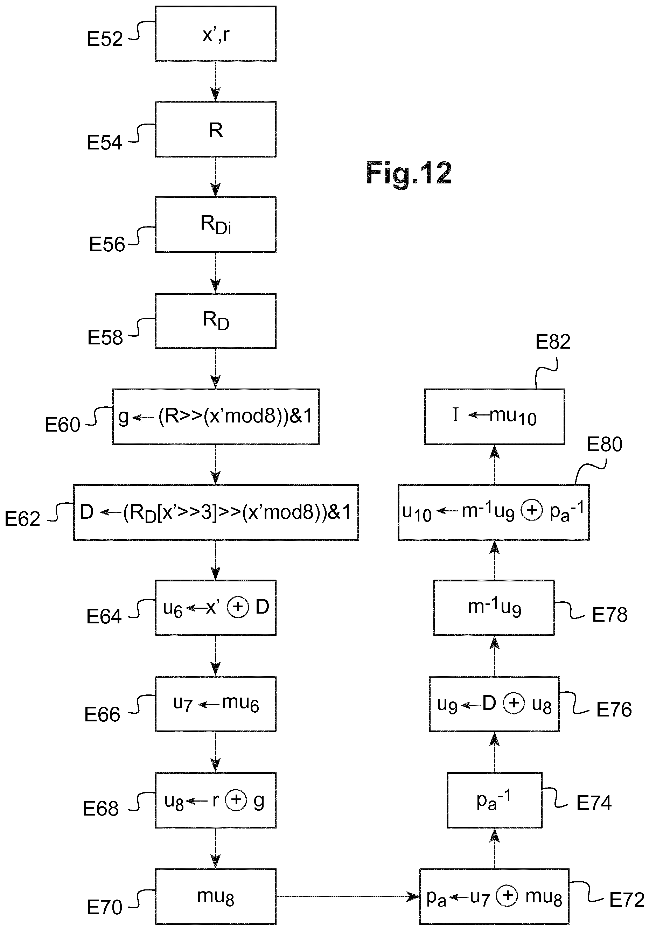

Une de ces mémoires, par exemple la mémoire non-volatile réinscriptible 6, mémorise des instructions de programme d'ordinateur qui permettent la mise en œuvre de l'un au moins des procédés décrits ci-dessous en référence aux figures 2 et 12 lorsque ces instructions sont exécutées par le processeur 2.

Les mémoires 4, 6 stockent également des données représentatives de valeurs utilisées lors de la mise en œuvre des procédés décrits ci-dessous. Par exemple, la mémoire non-volatile réinscriptible 6 mémorise une clé cryptographique K.

La mémoire vive 4 mémorise par ailleurs, par exemple au sein de variables, des données traitées au cours des procédés décrits ci-dessous.

L'entité électronique 1 comporte également un ensemble de modules (non représentés), par exemple un module de production et un module d'inversion. Ces modules peuvent en pratique être réalisés par une combinaison d'éléments matériels et d'éléments logiciels. Chaque module possède une fonctionnalité décrite dans les procédés conformes à l'invention et exposés ci-après. Ainsi, pour chaque module, l'entité électronique 1 mémorise par exemple des instructions de logiciel exécutables par le processeur 2 de l'entité électronique 1 afin d'utiliser un élément matériel (par exemple une interface de communication ou une mémoire) et de mettre ainsi en œuvre la fonctionnalité offerte par le module.

La figure 2 représente un premier exemple de procédé mis en œuvre dans l'entité électronique 1 conformément à l'invention.

Ce procédé constitue un procédé de traitement cryptographique d'une donnée d'entrée x dont on souhaite déterminer l'inverse multiplicatif tout en maintenant sa confidentialité.

On se place dans le cas où une donnée masquée x' est obtenue par masquage par un masque d'entrée r au moyen d'une opération de « ou exclusif » de la donnée d'entrée x dont on souhaite conserver la confidentialité : $x' = x \oplus r$. Le masque d'entrée r est généré de manière aléatoire.

Cette étape de masquage est par exemple réalisée préalablement à la mise en œuvre du procédé décrit ci-après. Cette étape de masquage est réalisée dans un module de masquage (non représenté) de la donnée d'entrée x.

La donnée d'entrée x, le masque d'entrée r et la donnée masquée x' sont par exemple définis sur un octet.

Comme représenté sur la figure 2, le procédé débute à l'étape E2. Lors de cette étape, le processeur reçoit la donnée masquée x' et le masque d'entrée r du module de masquage de la donnée d'entrée x. La donnée masquée x' et le masque d'entrée r sont par exemple stockés dans l'une des mémoires comprises dans l'entité électronique 1 pour la mise en œuvre de la suite du procédé.

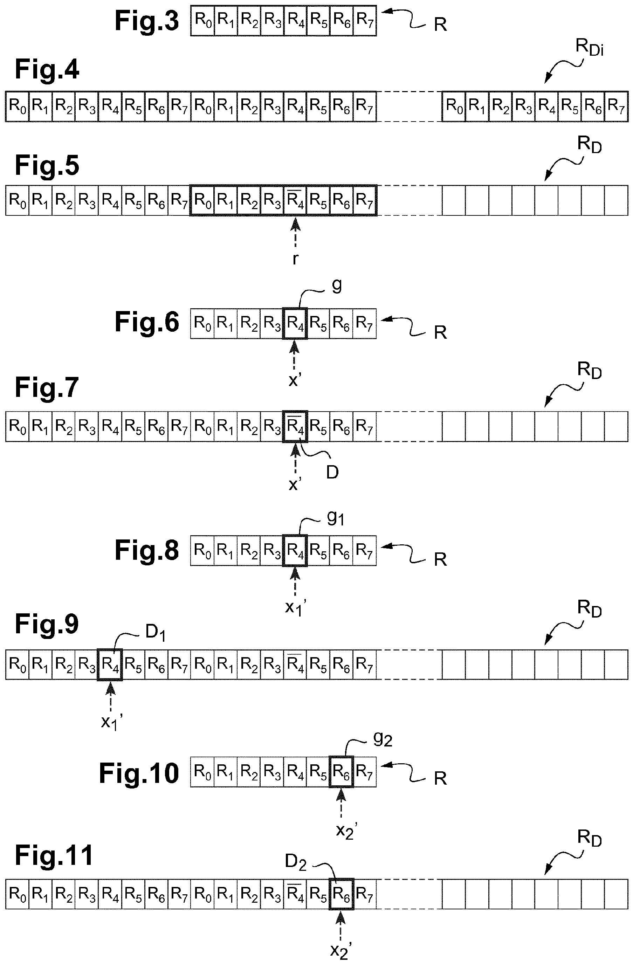

A l'étape E4, un bloc d'initialisation compris dans le module de production génère de manière aléatoire une donnée aléatoire R. La donnée aléatoire R est formée d'au moins deux bits. La figure 3 représente un exemple de donnée aléatoire R utilisée dans le cadre du procédé décrit ici. Comme visible sur la figure 3, la donnée aléatoire R peut avoir une longueur d'un octet. Chacun des bits $R_0$, $R_1$, $R_2$, $R_3$, $R_4$, $R_5$, $R_6$, et $R_7$ de la donnée aléatoire R est généré aléatoirement.

Comme visible sur la figure 2, le procédé se poursuit ensuite à l'étape E6. Lors de cette étape E6, un bloc de construction initialise une donnée de table initiale $R_{Di}$. La donnée de table initiale $R_{Di}$ est construite à partir de la donnée aléatoire R. L'étape E6 du procédé consiste en un remplissage de la donnée de table initiale $R_{Di}$ au moyen de la donnée aléatoire R. La figure 4 représente la donnée de table initiale $R_{Di}$ après remplissage avec la donnée aléatoire R. Comme visible sur cette figure 4, chaque bit de la donnée aléatoire R correspond à au moins un bit de la donnée de table initiale $R_{Di}$.

La donnée de table initiale $R_{Di}$ a ici une longueur d'au moins 32 octets. En pratique, la donnée de table initiale $R_{Di}$ comprend 256 bits, soit un bit pour chaque valeur possible de la donnée d'entrée x (donc de la donnée masquée x').

La donnée de table initiale $R_{Di}$ est ensuite actualisée à l'étape E8 afin de générer la donnée de table $R_D$. Cette étape d'actualisation fait intervenir le masque d'entrée r. L'opération effectuée s'écrit : $R_D[r\text{>>}3] = R \oplus (1 \text{ « } r \bmod 8)$. On rappelle que l'opération logique de « ou exclusif » (ou XOR) correspond au symbole $\oplus$ entre les variables considérées. Les symboles » et « correspondent respectivement à une opération de décalage vers la droite et vers la gauche de l'octet d'un nombre de bits égal à la valeur précisée après le symbole » ou «.

L'opération d'actualisation consiste en une opération d'inversion d'un bit spécifique de la donnée de table initiale $R_{Di}$. Le bit qui subit cette opération d'inversion est déterminé à partir du masque d'entrée r. D'après l'expression mathématique écrite ci-dessus, le bit de la donnée de table initiale $R_{Di}$ à inverser se trouve dans l'octet $r$ » 3.

Par exemple, si le masque d'entrée r est défini par l'octet 00001100, l'opération $r$ >> 3 de décalage de 3 pas vers la droite conduit à 00000001, et identifie donc le deuxième octet de la donnée de table initiale $R_{Di}$.

Puis, pour identifier le bit de ce deuxième octet qui sera inversé, on s'intéresse au reste de la division euclidienne de la valeur du masque d'entrée r par rapport à 8 (opération notée $r \bmod 8$ ci-dessus).

Dans l'exemple proposé ci-dessus, la valeur du masque d'entrée r est égale à 12 en notation décimale. Le reste de la division euclidienne par 8 est donc égal à $r \bmod 8 = 4$. C'est donc le cinquième bit $R_{r \bmod 8} = R_4$ du deuxième octet de la donnée de table initiale $R_{Di}$ qui sera inversé. L'inversion est réalisée par application d'une opération de « ou exclusif » entre le bit identifié (par exemple noté $R_i$) de la donnée de table initiale $R_{Di}$ et 1 ($R_i \oplus 1$).

En d'autres termes, l'étape E8 permet l'inversion, dans la donnée de table $R_D$, du bit associé à la valeur courante du masque d'entrée r.

La figure 5 représente la donnée de table $R_D$ obtenue à l'issue de l'opération d'actualisation réalisée dans le cadre de l'exemple présenté ci-dessus. Le bit qui a été inversé de par la correspondance avec le masque d'entrée r est mis en évidence.

Comme représenté sur la figure 2, le procédé se poursuit à l'étape E10 avec la construction d'un premier masque additif g. Le premier masque additif g est défini sur un bit. Il est défini par l'opération $g = (R \text{ » } (x'\bmod 8))\&1$, l'opération &1 permettant de ne retenir que le bit de poids le plus faible dans la donnée $(R \text{ » } (x'\bmod 8))$, c'est-à-dire le bit d'indice $x'\bmod 8$ dans la donnée aléatoire R. En utilisant les définitions précédemment introduites, ceci permet de choisir le premier masque additif g égal au bit de la donnée aléatoire R associé à la valeur de la donnée masquée x'.

Après la construction du premier masque additif g, on construit un deuxième masque additif D à l'étape E12 du procédé. Le deuxième masque additif D est également défini sur un bit. Il est défini par l'opération $D = (R_D[x'\text{» }3] \text{ » } (x'\bmod 8))\&1$. D correspond alors au bit de la donnée de table $R_D$ associé à la valeur de la donnée masquée x'.

Comme expliqué ci-après, la construction des premier et deuxième masques additifs proposée ci-dessus permet d'obtenir une combinaison par une opération de « ou exclusif » du premier masque additif g et du deuxième masque additif D nulle lorsque la donnée d'entrée x est non nulle. Cette combinaison est non nulle lorsque la donnée d'entrée x est nulle. Par exemple, lorsque la donnée d'entrée x est nulle, la combinaison par une opération de « ou exclusif » du premier masque additif g et du deuxième masque additif D est égale à un.

Les figures 6 et 7 représentent la détermination du premier masque additif g et du deuxième masque additif D lorsque la donnée d'entrée x est nulle.

Si la donnée d'entrée x est nulle, la donnée masquée x' vaut alors x' = $x \oplus r = 0 \oplus r = r$. Le premier masque additif g s'écrit alors : $g = (R \text{ » } (x'\bmod 8))\&1 = (R \text{ » } (r\bmod 8))\&1$. En réutilisant l'exemple introduit précédemment (r = 00001100), le premier masque additif g correspond au bit de la donnée aléatoire R de rang $r\bmod 8$. Ici, $r\bmod 8 = 4$, donc, comme représenté sur la figure 6, g correspond au cinquième bit de la donnée aléatoire R : $g = R_4$.

En ce qui concerne la détermination du deuxième masque additif D dans le cas où la donnée d'entrée x est nulle, on a : $D = (R_D[x' \gg 3] \gg (x'mod8))\&1 = (R_D[r \gg 3] \gg (rmod8))\&1$. Il a été montré dans le cadre de l'exemple préalablement introduit que l'opération $R_D[r \gg 3] \gg (rmod8)$ permettait de sélectionner le cinquième bit du deuxième octet de la donnée de table $R_D$. Ainsi, comme représenté sur la figure 7, dans le cadre de cet exemple, le deuxième masque additif D vaut alors $D = \overline{R_4}$.

Finalement, par construction, la combinaison par l'opération de « ou exclusif » du premier masque additif g et du deuxième masque additif déterminés est égale à $g \oplus D = R_4 \oplus \overline{R_4} = 1$.

Les figures 8 et 9 représentent un premier exemple de détermination du premier masque additif g (noté $g_1$ dans cet exemple) et du deuxième masque additif D (noté $D_1$ dans cet exemple) lorsque la donnée d'entrée x est non nulle.

Dans le cadre de ce premier exemple, on suppose que, pour une donnée d'entrée $x_1$ non nulle, $x'_1 \gg 3$ est différent de r » 3. Ainsi, de part la définition du deuxième masque additif $D_1 = \left(R_D[x'_1 \gg 3] \gg (x'_1 mod8)\right)\&1$, le bit de la donnée de table $R_D$ correspondant au deuxième masque additif $D_1$ ne se trouve pas dans le même octet que le bit qui a été inversé à l'étape E8. Le deuxième masque additif $D_1$ correspond donc à un bit de la donnée aléatoire R.

Dans l'exemple présenté sur les figures 8 et 9, la donnée masquée $x'_1$ est définie par l'octet 00000100. L'opération $x'_1 \gg 3$ de décalage de 3 pas vers la droite conduit à 00000000, et identifie donc le premier octet de la donnée de table $R_D$.

Puis, pour identifier le bit de ce premier octet qui correspond au deuxième masque additif $D_1$, on s'intéresse au reste de la division euclidienne de la valeur de la donnée masquée $x'_1$ par rapport à 8. Ici, la valeur de la donnée masquée $x'_1$ est égale à 4. Le reste de la division euclidienne par 8 est donc égal à $x'_1 \bmod 8 = 4$. L'identification du deuxième masque additif $D_1$ est représentée sur la figure 9 et il vaut alors $D_1 = R_4$.

Dans le cadre de cet exemple, on détermine également le premier masque additif $g_1$ : $g_1 = \left(R \gg (x'_1 mod8)\right)\&1$. Ici, $x'_1 \bmod 8 = 4$. Donc le premier masque additif $g_1$ vaut $g_1 = R_4$, comme identifié sur la figure 8.

Finalement, par construction, la combinaison par l'opération de « ou exclusif» du premier masque additif $g_1$ et du deuxième masque additif $D_1$ déterminés est égale à $g_1 \oplus D_1 = R_4 \oplus R_4 = 0$ (on retrouve un résultat nul dans le cas d'une donnée d'entrée $x_1$ non nulle).

Les figures 10 et 11 représentent un deuxième exemple de détermination du premier masque additif g (noté $g_2$ dans cet exemple) et du deuxième masque additif D (noté $D_2$ dans cet exemple) lorsque la donnée d'entrée x est non nulle.

Dans le cadre de ce deuxième exemple, on suppose que, pour une donnée d'entrée $x_2$ non nulle, $x'_2 \gg 3$ est égal à r » 3, tout en ayant une donnée masquée $x'_2$ différente du masque d'entrée r.

Ainsi, de part la définition du deuxième masque additif $D_2 = \left(R_D[x'_2 \gg 3] \gg (x'_2 mod8)\right)\&1$, le bit de la donnée de table $R_D$ correspondant au deuxième masque additif $D_2$ se trouve dans le même octet que le bit qui a été inversé à l'étape E8.

En revanche, comme la donnée d'entrée $x_2$ est non nulle, la donnée masquée $x'_2 = x_2 \oplus r$ est différente du masque d'entrée r. Donc le reste de la division euclidienne de $x'_2$ par 8 sera différent du reste de la division euclidienne de r par 8 (en d'autres termes, $x'_2 mod8 \neq rmod8$). Finalement, dans cette configuration, même si le bit correspondant au deuxième masque additif $D_2$ se trouve dans l'octet de la donnée de table $R_D$ comportant le bit inversé à l'étape E8, le deuxième masque additif $D_2$ ne sera pas égal à ce bit inversé.

Dans l'exemple présenté sur les figures 10 et 11, la donnée masquée $x'_2$ est définie par l'octet 00001110. L'opération $x'_1 \gg 3$ de décalage de 3 pas vers la droite conduit à 00000001, et identifie donc le deuxième octet de la donnée de table $R_D$.

Puis, pour identifier le bit de ce deuxième octet qui correspond au deuxième masque additif $D_2$, on s'intéresse

au reste de la division euclidienne de la valeur de la donnée masquée $x_2'$ par rapport à 8. Ici, la valeur de la donnée masquée $x_2'$ est égale à 14. Le reste de la division euclidienne par 8 est donc égal à $x_2' \bmod 8 = 6$. L'identification du deuxième masque additif $D_2$ est représentée sur la figure 11 et il vaut alors $D_2 = R_6$.

Dans le cadre de cet exemple, on détermine également le premier masque additif $g_2$ :

$$g_2 = \left(R \gg (x_2' \bmod 8)\right) \& 1$$

. Ici, $x_2' \bmod 8 = 6$. Donc le premier masque additif $g_2$ vaut $g_2 = R_6$, comme identifié sur la figure 10.

Finalement, par construction, la combinaison par l'opération de « ou exclusif» du premier masque additif $g_2$ et du deuxième masque additif $D_2$ déterminés est égale à $g_2 \oplus D_2 = R_6 \oplus R_6 = 0$ (on retrouve un résultat nul dans le cas d'une donnée d'entrée $x_2$ non nulle).

Comme représenté sur la figure 2, une fois le premier masque additif $g$ et le deuxième masque additif $D$ déterminés, le procédé se poursuit à l'étape E14. Lors de cette étape E14, une première donnée $u_1$ est déterminée par masquage, au moyen d'une opération de « ou exclusif », de la donnée masquée x'. Le masque utilisé ici est le premier masque additif $g$ : $u_1 = x' \oplus g$.

A l'étape E16, la première donnée $u_1$ déterminée à l'étape E14 est masquée au moyen d'un masque multiplicatif $m$, par exemple préalablement généré par tirage aléatoire. A l'issue de l'étape E16, on obtient une deuxième donnée $u_2$ : $u_2 = m \times u_1 = m \times (x' \oplus g)$.

A l'étape E18, on génère une troisième donnée $u_3$ par combinaison au moyen d'une opération de « ou exclusif » entre le masque d'entrée r et le deuxième masque additif D : $u_3 = r \oplus D$. Cette troisième donnée $u_3$ est ensuite, à l'étape E20, masquée au moyen du masque multiplicatif $m$ pour obtenir une quatrième donnée : $m \times u_3 = m \times (r \oplus D)$.

Comme représenté sur la figure 2, le procédé se poursuit ensuite à l'étape E22. Lors de cette étape E22, on combine par une opération de « ou exclusif» la deuxième donnée $u_2$ obtenue à l'étape E16 et la quatrième donnée obtenue à l'étape E20. A l'issue de l'étape E22, on obtient une donnée de produit p: $p = u_2 \oplus (m \times u_3) = (m \times (x' \oplus g)) \oplus (m \times (r \oplus D)) = m \times (x' \oplus g \oplus r \oplus D)$. Or, par définition de la donnée masquée x', on a : $x' \oplus r = x \oplus r \oplus r = x$. Donc la donnée de produit p s'écrit : $p = m \times (x \oplus g \oplus D)$.

A l'étape E24, une opération d'inversion multiplicative est appliquée à la donnée de produit p obtenue à l'étape E22 de manière à obtenir $p^{-1}$ : $p^{-1} = [m \times (x \oplus g \oplus D)]^{-1}$. L'inverse multiplicatif $p^{-1}$ de la donnée de produit p est par exemple ensuite stocké dans une des mémoires de l'entité électronique 1 afin d'être utilisé ultérieurement dans le procédé.

Parallèlement, à l'étape E26, une cinquième donnée $u_4$ est déterminée par masquage au moyen d'une opération de « ou exclusif » de la troisième donnée $u_3$ obtenue à l'étape E18. Le masque utilisé ici est le premier masque additif g. La cinquième donnée $u_4$ s'écrit alors : $u_4 = g \oplus u_3 = g \oplus r \oplus D$.

La cinquième donnée $u_4$ est ensuite masquée à l'étape E28 au moyen de l'inverse multiplicatif du masque multiplicatif m pour déterminer une sixième donnée : $m^{-1} \times u_4 = m^{-1} \times (g \oplus r \oplus D)$.

Comme visible sur la figure 2, le procédé se poursuit à l'étape E30. Lors de cette étape, on combine par une opération de « ou exclusif » la sixième donnée obtenue à l'étape E28 et l'inverse multiplicatif $p^{-1}$ de la donnée de produit déterminé à l'étape E24. A l'issue de l'étape E30, on obtient une septième donnée $u_5$ : $u_5 = (m^{-1} \times u_4) \oplus p^{-1} = [m^{-1} \times (g \oplus r \oplus D)] \oplus [m \times (x \oplus g \oplus D)]^{-1} = m^{-1} \times [(g \oplus r \oplus D) \oplus (x \oplus g \oplus D)^{-1}]$.

Le procédé se termine à l'étape E32 avec le masquage, au moyen du masque multiplicatif m, de la septième donnée $u_5$: $m \times u_5 = m \times m^{-1} \times [(g \oplus r \oplus D) \oplus (x \oplus g \oplus D)^{-1}] = (g \oplus r \oplus D) \oplus (x \oplus g \oplus D)^{-1}$.

A l'issue de cette étape E32, on distingue deux cas en fonction du résultat de la combinaison par l'opération de « ou exclusif» entre le premier masque additif g et le deuxième masque additif D.

Dans le cas où $g \oplus D = 0$ (cela correspond au cas d'une donnée d'entrée non nulle), le résultat obtenu à l'issue de l'étape E32 s'écrit : $m \times u_5 = (r \oplus 0) \oplus (x \oplus 0)^{-1} = r \oplus x^{-1} = I$. On obtient donc l'inverse multiplicatif (masqué par le masque d'entrée r) de la donnée d'entrée x.

Dans le cas où $g \oplus D = 1$ (cela correspond au cas d'une donnée d'entrée nulle), le résultat obtenu à l'issue de l'étape E32 s'écrit : $m \times u_5 = (r \oplus 1) \oplus (x \oplus 1)^{-1} = (r \oplus 1) \oplus (x \oplus 1)^{-1} = (r \oplus 1) \oplus (1)^{-1} = (r \oplus 1) \oplus 1 = r = I$. Or, on prévoit par convention que l'inverse de la valeur nulle est la valeur nulle elle-même, comme c'est par exemple le cas du standard de chiffrement avancé. Ainsi, à l'issue de l'étape E32, on obtient $r \oplus 0$ qui correspond bien à l'inverse de la donnée d'entrée (nulle ici et masquée par le masque d'entrée r).

La succession d'opérations décrites ci-dessus est par exemple utilisée dans le cadre d'un algorithme cryptographique. Par exemple, elle peut être réalisée dans un cryptoprocesseur ou un coprocesseur. L'algorithme cryptographique peut par exemple être de type « standard de chiffrement avancé » (AES) ou « DES » ou encore « SEED » dans lesquels une étape (non linéaire avec l'opération de « ou exclusif ») d'inversion multiplicative est utilisée dans le cadre de la mise en œuvre d'une boîte de substitution. En pratique, le procédé décrit ici peut être mis en œuvre dès qu'une étape d'inversion multiplicative est présente dans l'algorithme cryptographique.

Lors de la mise en œuvre d'un tel algorithme cryptographique, les différentes opérations de traitement cryptographique sont réalisées plusieurs fois. Par exemple, dans le cas du standard de chiffrement avancé, on répertorie une opération non linéaire d'inversion multiplicative et une opération de permutation linéaire (comprenant un décalage de bits par ligne puis un mélange de bits par colonne). L'exécution de ces différentes étapes une fois définit un tour (une étape d'inversion multiplicative est donc mise en œuvre à chaque tour). Plusieurs tours sont réalisés dans l'exécution de l'algorithme cryptographique.

Selon une possibilité de réalisation du procédé conforme à l'invention, le masque d'entrée r peut être renouvelé à chaque mise en œuvre de l'algorithme cryptographique. Selon une autre possibilité de réalisation, il peut être renouvelé à chaque tour de l'algorithme cryptographique.

Le renouvellement de ce masque d'entrée r entraîne la mise à jour de la donnée de table $R_D$ (correspondant à l'étape E8 du procédé représenté sur la figure 2).

Dans cette variante, on suppose que le procédé a été mis en œuvre une première fois avec un premier masque d'entrée $r_1$. Ce premier masque d'entrée $r_1$ est généré de manière aléatoire. Une première donnée de table $R_{D1}$ est ensuite construite selon les étapes décrites précédemment.

Le tour suivant de mise en œuvre de l'algorithme cryptographique nécessite le remplacement du premier masque d'entrée $r_1$ par un deuxième masque d'entrée $r_2$. Le deuxième masque d'entrée $r_2$ est également généré de manière aléatoire.

Une fois le masque d'entrée renouvelé, on procède à la mise à jour de la première donnée de table $R_{D1}$ en une deuxième donnée de table $R_{D2}$. Pour cela, le bit de la première donnée de table $R_{D1}$ qui a été inversé (par association au premier masque d'entrée $r_1$) est remis à une valeur initiale. Cette valeur initiale est celle correspondante dans la donnée aléatoire R. En d'autres termes, la première donnée de table $R_{D1}$ est remise sous la forme de la donnée de table initiale $R_{Di}$. Par exemple, on peut imaginer que le rang de l'octet dans lequel le bit a été inversé a été stocké dans l'une des mémoires de l'entité électronique 1. Ainsi, lors de cette étape de remise à la valeur initiale, seul l'octet en question est modifié (en étant remplacé par la valeur de la donnée aléatoire R).

La deuxième donnée de table $R_{D2}$ est construite selon l'étape E8 décrite précédemment, à partir du deuxième masque d'entrée $r_2$ (le nouveau masque utilisé pour ce tour). Ainsi, le bit associé à ce deuxième masque d'entrée $r_2$ est inversé dans la donnée de table réinitialisée de manière à générer la deuxième donnée de table $R_{D2}$. Finalement, et malgré l'utilisation de valeurs aléatoires, la donnée de table est mise à jour de manière rapide car elle n'est pas réécrite intégralement à chaque tour. Cela permet également de limiter la puissance de calcul nécessaire dans le processeur 2.

La figure 12 représente un deuxième exemple de procédé mis en œuvre dans l'entité électronique 1 conformément à l'invention.

Selon ce deuxième exemple, le procédé débute à l'étape E52 dans laquelle, de manière similaire à l'étape E2 décrite précédemment, le processeur reçoit la donnée masquée x' et le masque d'entrée r du module de masquage de la donnée d'entrée x.

A l'étape E54, de manière similaire à l'étape E4, la donnée aléatoire R est générée aléatoirement.

Comme visible sur la figure 12, le procédé se poursuit ensuite à l'étape E56 avec l'initialisation de la donnée de table initiale $R_{Di}$ (étape similaire à l'étape E6).

La donnée de table initiale $R_{Di}$ est ensuite actualisée à l'étape E58, de manière similaire à l'étape E8 afin de générer la donnée de table $R_D$.

Selon ce deuxième exemple, lors des étapes E60 et E62, on construit respectivement le premier masque additif g et le deuxième masque additif D. Les mêmes règles de construction que celles présentées dans les étapes E10 et E12 sont appliquées dans le cadre de ce deuxième exemple.

Dans la suite de l'exemple présenté sur la figure 12, une fois le premier masque additif g et le deuxième masque additif D déterminés, le procédé se poursuit à l'étape E64. Lors de cette étape E64, une première donnée $u_6$ est déterminée par masquage, au moyen d'une opération de « ou exclusif », de la donnée masquée x'. Le masque utilisé ici est le deuxième masque additif D : $u_6 = x' \oplus D$.

A l'étape E66, la première donnée $u_6$ déterminée à l'étape E64 est masquée au moyen du masque multiplicatif m. A l'issue de l'étape E66, on obtient une deuxième donnée $u_7$ : $u_7 = m \times u_6 = m \times (x' \oplus D)$.

A l'étape E68, on génère une troisième donnée us par combinaison au moyen d'une opération de « ou exclusif» entre le masque d'entrée r et le premier masque additif g : $u_8 = r \oplus g$. Cette troisième donnée us est ensuite, à l'étape E70, masquée au moyen du masque multiplicatif m pour obtenir une quatrième donnée : $m \times u_8 = m \times (r \oplus g)$.

Comme représenté sur la figure 12, le procédé se poursuit ensuite à l'étape E72. Lors de cette étape E72, on combine par une opération de « ou exclusif » la deuxième donnée $u_7$ obtenue à l'étape E66 et la quatrième donnée obtenue à l'étape E70. A l'issue de l'étape E72, on obtient une autre donnée de produit $p_a$ : $p_a = u_7 \oplus (m \times u_8) = (m \times (x' \oplus D)) \oplus (m \times (r \oplus g)) = m \times (x' \oplus D \oplus r \oplus g)$. Or, par définition de la donnée masquée x', on a : $x' \oplus r = x \oplus r \oplus r = x$. Donc l'autre donnée de produit $p_a$ s'écrit : $p_a = m \times (x \oplus D \oplus g)$.

A l'étape E74, une opération d'inversion multiplicative est appliquée à l'autre donnée de produit $p_a$ obtenue à

l'étape E72 de manière à obtenir $p_a^{-1}$ : $p_a^{-1} = [m \times (x \oplus D \oplus g)]^{-1}$ .

Parallèlement, à l'étape E76, une cinquième donnée $u_9$ est déterminée par masquage au moyen d'une opération de « ou exclusif » de la troisième donnée $u_8$ obtenue à l'étape E68. Le masque utilisé ici est le deuxième masque additif D. La cinquième donnée $u_9$ s'écrit alors : $u_9 = D \oplus u_8 = D \oplus r \oplus g$.

La cinquième donnée $u_9$ est ensuite masquée à l'étape E78 au moyen de l'inverse multiplicatif du masque multiplicatif m afin d'obtenir une sixième donnée : $m^{-1} \times u_9 = m^{-1} \times (D \oplus r \oplus g)$.

Comme visible sur la figure 12, le procédé se poursuit à l'étape E80. Lors de cette étape, on combine par une opération de « ou exclusif » la sixième donnée obtenue à l'étape E78 et l'inverse multiplicatif $p_a^{-1}$ de l'autre donnée de produit déterminé à l'étape E74. A l'issue de l'étape E80, on obtient une septième donnée $u_{10}$ :

$$u_{10} = (m^{-1} \times u_9) \oplus p_a^{-1} = [m^{-1} \times (D \oplus r \oplus g)] \oplus [m \times (x \oplus D \oplus g)]^{-1} = m^{-1} \times [(D \oplus r \oplus g) \oplus (x \oplus D \oplus g)^{-1}].$$

Le procédé se termine à l'étape E82 avec le masquage, au moyen du masque multiplicatif m, de la septième donnée $u_{10}$ : $m \times u_{10} = m \times m^{-1} \times [(D \oplus r \oplus g) \oplus (x \oplus D \oplus g)^{-1}] = (D \oplus r \oplus g) \oplus (x \oplus D \oplus g)^{-1}$.

A l'issue de cette étape E82, on distingue également les deux cas introduits précédemment et obtenus en fonction du résultat de la combinaison par l'opération de « ou exclusif » entre le premier masque additif g et le deuxième masque additif D. Le résultat obtenu à l'issue de cette étape E82 correspond également à l'inverse multiplicatif de la donnée d'entrée x.

Le deuxième exemple du procédé présenté sur la figure 12 permet de mettre en évidence les rôles symétriques du premier masque additif g et du deuxième additif D par rapport à l'opération de « ou exclusif ».

## Revendications

**1.** Procédé de détermination de l'inverse multiplicatif (I) d'une donnée d'entrée (x) mis en œuvre dans un dispositif de traitement cryptographique, la donnée d'entrée (x) étant préalablement masquée par un masque d'entrée (r) au moyen d'une opération de « ou exclusif », dans lequel une opération d'inversion multiplicative est appliquée à une donnée produit d'un masque multiplicatif (m) et d'une somme égale à la combinaison par « ou exclusif » de la donnée d'entrée (x), d'un premier masque additif (g) et d'un deuxième masque additif (D), la combinaison par « ou exclusif» du premier masque additif (g) et du second masque additif (D) étant nulle lorsque la donnée d'entrée (x) est non nulle et non nulle lorsque la donnée d'entrée (x) est nulle,

le procédé comportant également les étapes suivantes :

- initialisation d'une donnée aléatoire (R) comprenant au moins deux bits,
- construction d'une donnée de table ($R_D$) par remplissage de ladite donnée de table ($R_D$) au moyen de la donnée aléatoire (R), ladite donnée de table ($R_D$) comprenant un bit pour chaque valeur possible de la donnée d'entrée (x), chaque bit de la donnée aléatoire (R) correspondant ainsi à au moins un bit de la donnée de table ($R_D$),
- inversion du bit de la donnée de table ($R_D$) associé à la valeur du masque d'entrée (r),
- construction du premier masque additif (g) à partir du bit de la donnée aléatoire (R) correspondant au bit de la donnée de table ($R_D$) associé à la valeur de la donnée d'entrée masquée (x'), et
- construction du deuxième masque additif (D) à partir du bit de la donnée de table ($R_D$) associé à la valeur de la donnée d'entrée masquée (x'), et

dans lequel la détermination de la donnée produit est réalisée au moyen des étapes suivantes :

- détermination d'une première donnée ($u_1$ ; $u_6$) par masquage au moyen d'une opération de « ou exclusif » entre la donnée d'entrée masquée (x') et un masque parmi le premier masque additif (g) et le second masque additif (D),
- détermination d'une deuxième donnée ($u_2$ ; $u_7$) par masquage au moyen du masque multiplicatif (m) de la première donnée ($u_1$ ; $u_6$),
- détermination d'une troisième donnée ($u_3$ ; $u_8$) par une opération de « ou exclusif» entre le masque d'entrée (r) et l'autre masque parmi le deuxième masque additif (D) et le premier masque additif (g),
- détermination d'une quatrième donnée par masquage au moyen du masque multiplicatif (m) de la troisième donnée ($u_3$ ; $u_8$),

- obtention de la donnée produit (p) au moyen d'une opération de « ou exclusif » entre la deuxième donnée ($u_2$ ; $u_7$) et la quatrième donnée.

2. Procédé de détermination de l'inverse multiplicatif d'une donnée d'entrée selon la revendication 1, comportant également, lorsqu'un premier masque d'entrée ($r_1$) est remplacé par un deuxième masque d'entrée ($r_2$), une étape de mise à jour de la donnée de table ($R_D$) de manière à ce que :

   - le bit associé au premier masque d'entrée ($r_1$) soit remis à la valeur correspondante dans la donnée aléatoire (R), et que
   - le bit associé au deuxième masque d'entrée ($r_2$) soit inversé.

3. Procédé de détermination de l'inverse multiplicatif d'une donnée d'entrée selon la revendication 1 ou 2, dans lequel l'étape de remplissage est mise en œuvre par recopie de la donnée aléatoire (R) une pluralité de fois.

4. Procédé de détermination de l'inverse multiplicatif d'une donnée d'entrée selon l'une quelconque des revendications 1 à 3, dans lequel la combinaison par «ou exclusif» du premier masque additif (g) et du second masque additif (D) est égale à un lorsque la donnée d'entrée (x) est nulle.

5. Procédé de détermination de l'inverse multiplicatif d'une donnée d'entrée selon l'une quelconque des revendications 1 à 4, dans lequel la première donnée ($u_1$) est déterminée par masquage au moyen d'une opération de « ou exclusif » entre la donnée d'entrée masquée (x') et le premier masque additif (g).

6. Procédé de détermination de l'inverse multiplicatif d'une donnée d'entrée selon la revendication 5, comprenant en outre les étapes suivantes :

   - détermination d'une cinquième donnée ($u_4$) par masquage au moyen d'une opération de «ou exclusif» entre le premier masque additif (g) et la troisième donnée ($u_3$),
   - détermination d'une sixième donnée par masquage, au moyen de l'inverse du masque multiplicatif (m), de la cinquième donnée ($u_4$),
   - détermination d'une septième donnée ($u_5$) au moyen d'une opération de « ou exclusif » entre le résultat de ladite opération d'inversion de la donnée produit (p) et la sixième donnée, et
   - obtention de l'inverse multiplicatif de la donnée d'entrée (x) par masquage, au moyen du masque multiplicatif (m), de la septième donnée.

7. Procédé de détermination de l'inverse multiplicatif d'une donnée d'entrée selon l'une quelconque des revendications 1 à 4, dans lequel la première donnée ($u_6$) est déterminée par masquage au moyen d'une opération de « ou exclusif » entre la donnée d'entrée masquée (x') et le deuxième masque additif (D).

8. Procédé de détermination de l'inverse multiplicatif d'une donnée d'entrée selon la revendication 7, comprenant en outre les étapes suivantes :

   - détermination d'une cinquième donnée ($u_9$) par masquage au moyen d'une opération de « ou exclusif » entre le deuxième masque additif (D) et la troisième donnée ($u_8$),
   - détermination d'une sixième donnée par masquage, au moyen de l'inverse du masque multiplicatif (m), de la cinquième donnée ($u_9$),
   - détermination d'une septième donnée ($u_{10}$) au moyen d'une opération de « ou exclusif » entre le résultat de ladite opération d'inversion de la donnée produit et la sixième donnée, et
   - obtention de l'inverse multiplicatif de la donnée d'entrée (x) par masquage, au moyen du masque multiplicatif (m), de la septième donnée.

9. Procédé de détermination de l'inverse multiplicatif d'une donnée d'entrée selon l'une quelconque des revendications 1 à 8, dans lequel le masque d'entrée (r) et le masque multiplicatif (m) sont générés aléatoirement.

10. Procédé de détermination de l'inverse multiplicatif d'une donnée d'entrée selon l'une quelconque des revendications 1 à 9, dans lequel la donnée aléatoire (R) a une longueur d'au moins un octet.

11. Programme d'ordinateur comprenant des instructions exécutables par un processeur et adaptées à mettre en œuvre le procédé selon l'une quelconque des revendications 1 à 10 lorsque ces instructions sont exécutées par le processeur.

**12.** Dispositif de traitement cryptographique conçu pour déterminer l'inverse multiplicatif d'une donnée d'entrée (x) masquée par un masque d'entrée (r) au moyen d'une opération de « ou exclusif », le dispositif comprenant :

- un module de production d'un premier masque additif (g) et d'un deuxième masque additif (D) configuré de sorte que la combinaison par « ou exclusif » du premier masque additif (g) et du second masque additif (D) est nulle lorsque la donnée d'entrée (x) est non nulle et est non nulle lorsque la donnée d'entrée (x) est nulle,
- un module d'inversion conçu pour appliquer une opération d'inversion multiplicative à une donnée produit d'un masque multiplicatif (m) et d'une somme égale à la combinaison par « ou exclusif » de la donnée d'entrée (x), du premier masque additif (g) et du deuxième masque additif (D),

le module de production comprenant :

- un bloc d'initialisation d'une donnée aléatoire (R) comprenant au moins deux bits,
- un bloc de construction d'une donnée de table ($R_D$) par remplissage de ladite donnée de table ($R_D$) au moyen de la donnée aléatoire (R), ladite donnée de table ($R_D$) comprenant un bit pour chaque valeur possible de la donnée d'entrée (x), chaque bit de la donnée aléatoire (R) correspondant ainsi à au moins un bit de la donnée de table ($R_D$),
- un bloc d'inversion du bit de la donnée de table ($R_D$) associé à la valeur du masque d'entrée (r),
- un bloc de construction du premier masque additif (g) à partir du bit de la donnée aléatoire (R) correspondant au bit de la donnée de table ($R_D$) associé à la valeur de la donnée d'entrée masquée (x'), et
- un bloc de construction du deuxième masque additif (D) à partir du bit de la donnée de table ($R_D$) associé à la valeur de la donnée d'entrée masquée (x'), et

dans lequel le module d'inversion est conçu pour :

- déterminer une première donnée ($u_1$ ; $u_6$) par masquage au moyen d'une opération de « ou exclusif » entre la donnée d'entrée masquée (x') et un masque parmi le premier masque additif (g) et le second masque additif (D),
- déterminer une deuxième donnée ($u_2$ ; $u_7$) par masquage au moyen du masque multiplicatif (m) de la première donnée ($u_1$ ; $u_6$),
- déterminer une troisième donnée ($u_3$ ; $u_8$) par une opération de « ou exclusif» entre le masque d'entrée (r) et l'autre masque parmi le deuxième masque additif (D) et le premier masque additif (g),
- déterminer une quatrième donnée par masquage au moyen du masque multiplicatif (m) de la troisième donnée ($u_3$, $u_8$),
- obtenir ladite donnée produit (p) au moyen d'une opération de « ou exclusif » entre la deuxième donnée ($u_2$ ; $u_7$) et la quatrième donnée.

**13.** Dispositif de traitement cryptographique selon la revendication 12, comprenant également un module de détermination de la donnée produit (p, $p_a$), ledit module comprenant :

- un bloc de masquage au moyen d'une opération de « ou exclusif » de la donnée d'entrée masquée (x') afin de déterminer la première donnée ($u_1$, $u_6$),
- un bloc de masquage au moyen du masque multiplicatif (m) de la première donnée afin de déterminer la deuxième donnée ($u_2$, $u_7$),
- un bloc de masquage par une opération de « ou exclusif » du masque d'entrée (r) afin de déterminer la troisième donnée ($u_3$, $u_8$),
- un bloc de masquage au moyen du masque multiplicatif (m) de la troisième donnée ($u_3$, $u_8$) afin de déterminer une quatrième donnée, et
- un bloc d'obtention de la donnée produit (p, $p_a$) au moyen d'une opération de « ou exclusif » entre la deuxième donnée ($u_2$, $u_7$) et la quatrième donnée.

**14.** Dispositif de traitement cryptographique selon la revendication 13, comprenant également un module de détermination de l'inverse multiplicatif de la donnée d'entrée (x), ledit module comprenant :

- un bloc de masquage au moyen d'une opération de « ou exclusif » de la troisième donnée ($u_3$ ; $u_8$) afin de déterminer une cinquième donnée ($u_4$, $u_9$),
- un bloc de masquage au moyen de l'inverse du masque multiplicatif (m) de la cinquième donnée ($u_4$ ; $u_9$) afin

de déterminer une sixième donnée,
- un bloc de combinaison par une opération de « ou exclusif » entre le résultat de ladite opération d'inversion de la donnée produit et la sixième donnée afin de déterminer une septième donnée ($u_5$ ; $u_{10}$), et
- un bloc d'obtention de l'inverse multiplicatif (I) de la donnée d'entrée (x) par masquage, au moyen du masque multiplicatif (m), de la septième donnée ($u_5$ ; $u_{10}$).

**Patentansprüche**

1. Verfahren zur Bestimmung der multiplikativen Inversen (I) eines Eingangsdatenelements (x), das in einer kryptographischen Verarbeitungsvorrichtung implementiert ist, wobei das Eingangsdatenelement (x) zuvor durch eine Eingabemaske (r) mittels einer "exklusiven ODER"-Operation maskiert wurde, wobei eine multiplikative Inversionsoperation auf ein Datenelement angewendet wird, das das Produkt einer multiplikativen Maske (m) und einer Summe ist, die gleich der "exklusiven ODER"-Verknüpfung des Eingangsdatenelements (x), einer ersten additiven Maske (g) und einer zweiten additiven Maske (D) ist, wobei die "exklusive ODER"-Verknüpfung der ersten additiven Maske (g) und der zweiten additiven Maske (D) null ist, wenn das Eingangsdatenelement (x) nicht null ist, und nicht null ist, wenn das Eingangsdatenelement (x) null ist,

   wobei das Verfahren ferner die folgenden Schritte umfasst:

   - Initialisierung eines Zufallsdatenelements (R), das mindestens zwei Bits umfasst,
   - Konstruktion eines Tabellendatenelements ($R_D$) durch Auffüllen des Tabellendatenelements ($R_D$) mittels des Zufallsdatenelements (R), wobei das Tabellendatenelement ($R_D$) für jeden möglichen Wert des Eingangsdatenelements (x) ein Bit umfasst, wobei jedes Bit des Zufallsdatenelements (R) somit mindestens einem Bit des Tabellendatenelements ($R_D$) entspricht,
   - Inversion des Bits des Tabellendatenelements ($R_D$), das dem Wert der Eingabemaske (r) zugeordnet ist,
   - Konstruktion der ersten additiven Maske (g) aus dem Bit des Zufallsdatenelements (R), das dem Bit des Tabellendatenelements ($R_D$) entspricht, das dem Wert des maskierten Eingangsdatenelements (x') zugeordnet ist, und
   - Konstruktion der zweiten additiven Maske (D) aus dem Bit des Tabellendatenelements ($R_D$), das dem Wert des maskierten Eingangsdatenelements (x') zugeordnet ist, und

   wobei die Bestimmung des Produktdatenelements mittels der folgenden Schritte durchgeführt wird:

   - Bestimmung eines ersten Datenelements ($u_1$, $u_6$) durch Maskierung mittels einer "exklusiven ODER"-Operation zwischen dem maskierten Eingangsdatenelement (x') und einer von der ersten additiven Maske (g) und der zweiten additiven Maske (D),
   - Bestimmung eines zweiten Datenelements ($u_2$; $u_7$) durch Maskierung des ersten Datenelements ($u_1$, $u_6$) mittels der multiplikativen Maske (m),
   - Bestimmung eines dritten Datenelements ($u_3$; $u_8$) durch eine "exklusive ODER"-Operation zwischen der Eingabemaske (r) und der jeweils anderen von der zweiten additiven Maske (D) und der ersten additiven Maske (g),
   - Bestimmung eines vierten Datenelements durch Maskierung des dritten Datenelements ($u_3$; $u_8$) mittels der multiplikativen Maske (m),
   - Erhalt des Produktdatenelements (p) mittels einer "exklusiven ODER"-Operation zwischen dem zweiten Datenelement ($u_2$; $u_7$) und dem vierten Datenelement.

2. Verfahren zur Bestimmung der multiplikativen Inversen eines Eingangsdatenelements nach Anspruch 1, ferner, wenn eine erste Eingabemaske ($r_1$) durch eine zweite Eingabemaske ($r_2$) ersetzt wird, einen Schritt zur Aktualisierung des Tabellendatenelements ($R_D$) umfassend, so dass:

   - das der ersten Eingabemaske ($r_1$) zugeordnete Bit auf den entsprechenden Wert in dem Zufallsdatenelement (R) zurückgesetzt wird, und dass
   - das der zweiten Eingabemaske ($r_2$) zugeordnete Bit invertiert wird.

3. Verfahren zur Bestimmung der multiplikativen Inversen eines Eingangsdatenelements nach Anspruch 1 oder 2, wobei der Schritt des Auffüllens durch mehrmaliges Kopieren des Zufallsdatenelements (R) implementiert wird.

4.  Verfahren zur Bestimmung der multiplikativen Inversen eines Eingangsdatenelements nach einem der Ansprüche 1 bis 3, wobei die "exklusive ODER"-Verknüpfung der ersten additiven Maske (g) und der zweiten additiven Maske (D) gleich eins ist, wenn das Eingangsdatenelement (x) null ist.

5.  Verfahren zur Bestimmung der multiplikativen Inversen eines Eingangsdatenelements nach einem der Ansprüche 1 bis 4, wobei das erste Datenelement ($u_1$) durch Maskierung mittels einer "exklusiven ODER"-Operation zwischen dem maskierten Eingangsdatenelement (x') und der ersten additiven Maske (g) bestimmt wird.

6.  Verfahren zur Bestimmung der multiplikativen Inversen eines Eingangsdatenelements nach Anspruch 5, das ferner die folgenden Schritte umfasst:

    - Bestimmung eines fünften Datenelements ($u_4$) durch Maskierung mittels einer "exklusiven ODER"-Operation zwischen der ersten additiven Maske (g) und dem dritten Datenelement ($u_3$),
    - Bestimmung eines sechsten Datenelements durch Maskierung des fünften Datenelements ($u_4$) mittels der Inversen der multiplikativen Maske (m),
    - Bestimmung eines siebten Datenelements ($u_5$) mittels einer "exklusiven ODER"-Operation zwischen dem Ergebnis der Inversionsoperation des Produktdatenelements (p) und dem sechsten Datenelement, und
    - Erhalten der multiplikativen Inversen des Eingangsdatenelements (x) durch Maskierung des siebten Datenelements mittels der multiplikativen Maske (m).

7.  Verfahren zur Bestimmung der multiplikativen Inversen eines Eingangsdatenelements nach einem der Ansprüche 1 bis 4, wobei das erste Datenelement ($u_6$) durch Maskierung mittels einer "exklusiven ODER"-Operation zwischen dem maskierten Eingangsdatenelement (x') und der zweiten additiven Maske (D) bestimmt wird.

8.  Verfahren zur Bestimmung der multiplikativen Inversen eines Datenelements nach Anspruch 7, das ferner die folgenden Schritte umfasst:

    - Bestimmung eines fünften Datenelements ($u_9$) durch Maskierung mittels einer "exklusiven ODER"-Operation zwischen der zweiten additiven Maske (D) und dem dritten Datenelement ($u_8$),
    - Bestimmung eines sechsten Datenelements durch Maskierung des fünften Datenelements ($u_9$) mittels der Inversen der multiplikativen Maske (m),
    - Bestimmung eines siebten Datenelements ($u_{10}$) mittels einer "exklusiven ODER"-Operation zwischen dem Ergebnis der Inversionsoperation des Produktdatenelements und dem sechsten Datenelement, und
    - Erhalten der multiplikativen Inversen des Eingangsdatenelements (x) durch Maskierung des siebten Datenelements mittels der multiplikativen Maske (m).

9.  Verfahren zur Bestimmung der multiplikativen Inversen eines Eingangsdatenelements nach einem der Ansprüche 1 bis 8, wobei die Eingabemaske (r) und die multiplikative Maske (m) zufällig generiert werden.

10. Verfahren zur Bestimmung der multiplikativen Inversen eines Eingangsdatenelements nach einem der Ansprüche 1 bis 9, wobei das Zufallsdatenelement (R) eine Länge von mindestens einem Byte aufweist.

11. Computerprogramm, Anweisungen umfassend, die von einem Prozessor ausführbar sind und dazu geeignet sind, das Verfahren nach einem der Ansprüche 1 bis 10 auszuführen, wenn diese Anweisungen von dem Prozessor ausgeführt werden.

12. Kryptographische Verarbeitungsvorrichtung, die dazu ausgelegt ist, die multiplikative Inverse eines Eingangsdatenelements (x), das durch eine Eingabemaske (r) maskiert ist, mittels einer "exklusiven ODER"-Operation zu bestimmen, wobei die Vorrichtung Folgendes umfasst:

    - ein Modul zum Erzeugen einer ersten additiven Maske (g) und einer zweiten additiven Maske (D), das so konfiguriert sind, dass die "exklusive ODER"-Verknüpfung der ersten additiven Maske (g) und der zweiten additiven Maske (D) null ist, wenn das Eingangsdatenelement (x) nicht null ist, und nicht null ist, wenn das Eingangsdatenelement (x) null ist,
    - ein Inversionsmodul, das dazu ausgelegt ist, eine multiplikative Inversionsoperation auf ein Datenelement anzuwenden, das das Produkt einer multiplikativen Maske (m) und einer Summe ist, die gleich der "exklusiven ODER"-Verknüpfung des Eingangsdatenelements (x), der ersten additiven Maske (g) und der zweiten additiven Maske (D) ist,

wobei das Modul zur Erzeugung Folgendes umfasst:

- einen Block zur Initialisierung eines Zufallsdatenelements (R), das mindestens zwei Bits umfasst,
- einen Block zur Konstruktion eines Tabellendatenelements ($R_D$) durch Auffüllen des Tabellendatenelements ($R_D$) mittels des Zufallsdatenelements (R), wobei das Tabellendatenelement ($R_D$) für jeden möglichen Wert des Eingangsdatenelements (x) ein Bit umfasst, wobei jedes Bit des Zufallsdatenelements (R) somit mindestens einem Bit des Tabellendatenelements ($R_D$) entspricht,
- einen Block zur Inversion des Bits des Tabellendatenelements ($R_D$), das dem Wert der Eingabemaske (r) zugeordnet ist,
- einen Block zur Konstruktion der ersten additiven Maske (g) aus dem Bit des Zufallsdatenelements (R), das dem Bit des Tabellendatenelements ($R_D$) entspricht, das dem Wert des maskierten Eingangsdatenelements (x') zugeordnet ist, und
- einen Block zu Konstruktion der zweiten additiven Maske (D) aus dem Bit des Tabellendatenelements ($R_D$), das dem Wert des maskierten Eingangsdatenelements (x') zugeordnet ist, und

wobei das Inversionsmodul ausgelegt ist zum:

- Bestimmen eines ersten Datenelements ($u_1$; $u_6$) durch Maskierung mittels einer "exklusiven ODER"-Operation zwischen dem maskierten Eingangsdatenelement (x') und einer von der ersten additiven Maske (g) und der zweiten additiven Maske (D),
- Bestimmen eines zweiten Datenelements ($u_2$; $u_7$) durch Maskierung des ersten Datenelements ($u_1$; $u_6$) mittels der multiplikativen Maske (m),
- Bestimmen eines dritten Datenelements ($u_3$; $u_8$) durch eine "exklusive ODER"-Operation zwischen der Eingabemaske (r) und der jeweils anderen von der zweiten additiven Maske (D) und der ersten additiven Maske (g),
- Bestimmen eines vierten Datenelements durch Maskierung des dritten Datenelements ($u_3$; $u_8$) mittels der multiplikativen Maske (m),
- Erhalten des Produktdatenelements (p) mittels einer "exklusiven ODER"-Operation zwischen dem zweiten Datenelement ($u_2$; $u_7$) und dem vierten Datenelement.

13. Kryptographische Verarbeitungsvorrichtung nach Anspruch 12, ferner ein Modul zur Bestimmung des Produktdatenelements ($p$, $p_a$) umfassend, wobei das Modul Folgendes umfasst:

- einen Block zur Maskierung des maskierten Eingangsdatenelements (x') mittels einer "exklusiven ODER"-Operation, um das erste Datenelement ($u_1$, $u_6$) zu bestimmen,
- einen Block zur Maskierung des ersten Datenelements mittels der multiplikativen Maske (m), um das zweite Datenelement ($u_2$, $u_7$) zu bestimmen,
- einen Block zur Maskierung der Eingabemaske (r) durch eine "exklusiven ODER"-Operation, um das dritte Datenelement ($u_3$, $u_8$) zu bestimmen,
- einen Block zur Maskierung des dritten Datenelements ($u_3$, $u_8$) mittels der multiplikativen Maske (m), um ein viertes Datenelement zu bestimmen, und
- einen Block zum Erhalten des Produktdatenelements ($p$, $p_a$) mittels einer "exklusiven ODER"-Operation zwischen dem zweiten Datenelement ($u_2$, $u_7$) und dem vierten Datenelement.

14. Kryptographische Verarbeitungsvorrichtung nach Anspruch 13, ferner ein Modul zur Bestimmung der multiplikativen Inversen des Eingangsdatenelements (x) umfassend, wobei das Modul Folgendes umfasst:

- einen Block zur Maskierung des dritten Datenelements ($u_3$; $u_8$) mittels einer "exklusiven ODER"-Operation, um ein fünftes Datenelement ($u_4$; $u_9$) zu bestimmen,
- einen Block zur Maskierung des fünften Datenelements ($u_4$; $u_9$) mittels der Inversen der multiplikativen Maske (m), um ein sechstes Datenelement zu bestimmen,
- einen Block zur Verknüpfung durch eine "exklusiven ODER"-Operation zwischen dem Ergebnis der Inversionsoperation des Produktdatenelements und dem sechsten Datenelement, um ein siebtes Datenelement ($u_5$; $u_{10}$) zu bestimmen, und
- einen Block zum Erhalten der multiplikativen Inversen (I) des Eingangsdatenelements (x) durch Maskierung des siebten Datenelements ($u_5$; $u_{10}$) mittels der multiplikativen Maske (m).

**Claims**

1. A method for determining the multiplicative inverse (I) of an input data item (x) implemented in a cryptographic processing device, the input data item (x) being previously masked by an input mask (r) by means of an "exclusive or" operation, wherein a multiplicative inverse operation is applied to a data item product of a multiplicative mask (m) and a sum equal to the combination by "exclusive or" of the input data item (x), of a first additive mask (g) and of a second additive mask (D), the combination by "exclusive or" of the first additive mask (g) and of the second additive mask (D) being zero when the input data item (x) is not zero and not zero when the input data item (x) is zero,

   the method also comprising the following steps:

   - initialization of a random data item (R) comprising at least two bits,
   - construction of a table data item ($R_D$) by filling said table data item ($R_D$) by means of the random data item (R), said table data item ($R_D$) comprising one bit for each possible value of the input data item (x), each bit of the random data item (R) thus corresponding to at least one bit of the table data item ($R_D$),
   - inversion of the bit of the table data item ($R_D$) associated with the value of the input mask (r),
   - construction of the first additive mask (g) from the bit of the random data item (R) corresponding to the bit of the table data item ($R_D$) associated with the value of the masked input data item (x'), and
   - construction of the second additive mask (D) from the bit of the table data item ($R_D$) associated with the value of the masked input data item (x'), and

   wherein the determination of the data product is performed by means of the following steps:

   - determination of a first data item ($u_1$; $u_6$) by masking by means of an "exclusive or" operation between the masked input data item (x') and a mask from the first additive mask (g) and the second additive mask (D),
   - determination of a second data item ($u_2$; $u_7$) by masking by means of the multiplicative mask (m) of the first data item ($u_1$; $u_6$),
   - determination of a third data item ($u_3$; $u_8$) by an "exclusive or" operation between the input mask (r) and the other mask from the second additive mask (D) and the first additive mask (g),
   - determination of a fourth data item by masking by means of the multiplicative mask (m) of the third data item ($u_3$; $u_8$),
   - obtaining the data item product (p) by means of an "exclusive or" operation between the second data item ($u_2$; $u_7$) and the fourth data item.

2. A method for determining the multiplicative inverse of an input data item according to claim 1, further comprising, when a first input mask ($r_1$) is replaced by a second input mask ($r_2$), a step for updating the table data item ($R_D$) so that:

   - the bit associated with the first input mask ($r_1$) is changed to the corresponding value in the random data item (R), and
   - the bit associated with the second input mask ($r_2$) is inversed.

3. A method for determining the multiplicative inverse of an input data item according to claim 1 or 2, wherein the filling step is implemented by reproducing the random data item (R) a plurality of times.

4. A method for determining the multiplicative inverse of an input data item according to any one of claims 1 to 3, wherein the combination by "exclusive or" of the first additive mask (g) and of the second additive mask (D) is equal to one when the input data item (x) is zero.

5. A method for determining the multiplicative inverse of an input data item according to any one of claims 1 to 4, wherein the first data item ($u_1$) is determined by masking by means of an "exclusive or" operation between the masked input data item (x') and the first additive mask (g).

6. A method for determining the multiplicative inverse of an input data item according to claim 5, further comprising the following steps:

   - determining a fifth data item ($u_4$) by masking by means of an "exclusive or" operation between the first additive mask (g) and the third data item ($u_3$),
   - determining a sixth data item by masking, by means of the inverse of the multiplicative mask (m), the fifth data

item ($u_4$),
- determining a seventh data item ($u_5$) by means of an "exclusive or" operation between the result of said inverse operation of the data item product (p) and the sixth data item, and
- obtaining the multiplicative inverse of the input data item (x) by masking, by means of the multiplicative mask (m), the seventh data item.

7. A method for determining the multiplicative inverse of an input data item according to any one of claims 1 to 4, wherein the first data item ($u_6$) is determined by masking by means of an "exclusive or" operation between the masked input data item (x') and the second additive mask (D).

8. A method for determining the multiplicative inverse of an input data item according to claim 7, further comprising the following steps:

   - determining a fifth data item ($u_9$) by masking by means of an "exclusive or" operation between the second additive mask (D) and the third data item ($u_8$),
   - determining a sixth data item by masking, by means of the inverse of the multiplicative mask (m), the fifth data item ($u_9$),
   - determining a seventh data item ($u_{10}$) by means of an "exclusive or" operation between the result of said inversion operation of the data item product and the sixth data item, and
   - obtaining the multiplicative inverse of the input data item (x) by masking, by means of the multiplicative mask (m), the seventh data item.

9. A method for determining the multiplicative inverse of an input data item according to any one of claims 1 to 8, wherein the input mask (r) and the multiplicative mask (m) are generated randomly.

10. A method for determining the multiplicative inverse of an input data item according to any one of claims 1 to 9, wherein the random data item (R) has a length of at least one byte.

11. A computer program comprising instructions executable by a processor and adapted to implement the method according to any one of claims 1 to 10 when these instructions are executed by the processor.

12. A cryptographic processing device designed to determine the multiplicative inverse of an input data item (x) masked by an input mask (r) by means of an "exclusive or" operation, the device comprising:

   - a module for generating a first additive mask (g) and a second additive mask (D) configured such that the combination by the "exclusive or" of the first additive mask (g) and of the second additive mask (D) is zero when the input data item (x) is not zero and is not zero when the input data item (x) is zero,
   - an inversion module designed to apply a multiplicative inversion operation to a data item product of a multiplicative mask (m) and of a sum equal to the combination by "exclusive or" of the input data item (x), of the first additive mask (g) and of the second additive mask (D),

   the generating module comprising:

   - a block for initializing a random data item (R) comprising at least two bits,
   - a block for constructing a table data item ($R_D$) by filling said table data item ($R_D$) by means of the random data item (R), said table data item ($R_D$) comprising one bit for each possible value of the input data item (x), each bit of the random data item (R) thus corresponding to at least one bit of the table data item ($R_D$),
   - an inversion block for the bit of the table data item ($R_D$) associated with the value of the input mask (r),
   - a block for constructing the first additive mask (g) from the bit of the random data item (R) corresponding to the bit of the table data item ($R_D$) associated with the value of the masked input data item (x'), and
   - a block for constructing the second additive mask (D) from the bit of the table data item ($R_D$) associated with the value of the masked input data item (x'), and

   wherein the inversion module is designed to:

   - determine a first data item ($u_1$; $u_6$) by masking by means of an "exclusive or" operation between the masked input data item (x') and a mask from the first additive mask (g) and the second additive mask (D),
   - determine a second data item ($u_2$; $u_7$) by masking, by means of the multiplicative mask (m), the first data item

$(u_1; u_6)$,
- determine a third data item ($u_3$; $u_8$) by an "exclusive or" operation between the input mask (r) and the other mask from the second additive mask (D) and the first additive mask (g),
- determine a fourth data item by masking, by means of the multiplicative mask (m), the third data item ($u_3$; $u_8$),
- obtain said data item product (p) by means of an "exclusive or" operation between the second data item ($u_2$; $u_7$) and the fourth data item.

13. A cryptographic processing device according to claim 12, further comprising a module for determining the data item product (p, $p_a$), said module comprising:

   - a block for masking by means of an "exclusive or" operation of the masked input data item (x') in order to determine the first data item ($u_1$, $u_6$),
   - a block for masking by means of a multiplicative mask (m) the first data item in order to determine the second data item ($u_2$, $u_7$),
   - a block for masking by an "exclusive or" operation the input mask (r) in order to determine the third data item ($u_3$, $u_8$),
   - a block for masking by means of the multiplicative mask (m) the third data item ($u_3$, $u_8$) in order to determine a fourth data item, and
   - a block for obtaining the data item product (p, $p_a$) by means of an "exclusive or" operation between the second data item ($u_2$, $u_7$) and the fourth data item.

14. A cryptographic processing device according to claim 13, further comprising a module for determining the multiplicative inverse of the input data item (x), said module comprising:

   - a block for masking by means of an "exclusive or" operation the third data item ($u_3$; $u_8$) in order to determine a fifth data item ($u_4$, $u_9$),
   - a block for masking by means of the inverse of the multiplicative mask (m) of the fifth data item ($u_4$; $u_9$) in order to determine a sixth data item,
   - a block for combining by an "exclusive or" operation between the result of said inversion operation of the data item product and the sixth data item in order to determine a seventh data item ($u_5$; $u_{10}$), and
   - a block for obtaining the multiplicative inverse (I) of the input data item (x) by masking, by means of the multiplicative mask (m), the seventh data item ($u_5$; $u_{10}$).

## Fig.1

$$1$$

$$2$$

$$4 \qquad \underline{K} \qquad 6$$

**Fig.1**

## Fig.2

E2 — $x', r$

E4 — $R$

E6 — $R_{Di}$

E8 — $R_D$

E10 — $g \leftarrow (R>>(x'\bmod 8))\&1$

E12 — $D \leftarrow (R_D[x'>>3]>>(x'\bmod 8))\&1$

E14 — $u_1 \leftarrow x' \oplus g$

E16 — $u_2 \leftarrow mu_1$

E18 — $u_3 \leftarrow r \oplus D$

E20 — $mu_3$

E22 — $p \leftarrow u_2 \oplus mu_3$

E24 — $p^{-1}$

E26 — $u_4 \leftarrow g \oplus u_3$

E28 — $m^{-1}u_4$

E30 — $u_5 \leftarrow m^{-1}u_4 \oplus p^{-1}$

E32 — $I \leftarrow mu_5$

**Fig.3** | $R_0$ | $R_1$ | $R_2$ | $R_3$ | $R_4$ | $R_5$ | $R_6$ | $R_7$ | ← R

**Fig.4**

$R_{Di}$

| $R_0$ | $R_1$ | $R_2$ | $R_3$ | $R_4$ | $R_5$ | $R_6$ | $R_7$ | $R_0$ | $R_1$ | $R_2$ | $R_3$ | $R_4$ | $R_5$ | $R_6$ | $R_7$ | ... | $R_0$ | $R_1$ | $R_2$ | $R_3$ | $R_4$ | $R_5$ | $R_6$ | $R_7$ |

**Fig.5**

$R_D$

| $R_0$ | $R_1$ | $R_2$ | $R_3$ | $R_4$ | $R_5$ | $R_6$ | $R_7$ | $R_0$ | $R_1$ | $R_2$ | $R_3$ | $\overline{R_4}$ | $R_5$ | $R_6$ | $R_7$ |

r

**Fig.6** | $R_0$ | $R_1$ | $R_2$ | $R_3$ | $R_4$ | $R_5$ | $R_6$ | $R_7$ | ← R

g

x'

**Fig.7**

$R_D$

| $R_0$ | $R_1$ | $R_2$ | $R_3$ | $R_4$ | $R_5$ | $R_6$ | $R_7$ | $R_0$ | $R_1$ | $R_2$ | $R_3$ | $\overline{\overline{R_4}}$ | $R_5$ | $R_6$ | $R_7$ |

x'  D

**Fig.8** | $R_0$ | $R_1$ | $R_2$ | $R_3$ | $R_4$ | $R_5$ | $R_6$ | $R_7$ | ← R

$g_1$

$x_1'$

**Fig.9**

$D_1$  $R_D$

| $R_0$ | $R_1$ | $R_2$ | $R_3$ | $R_4$ | $R_5$ | $R_6$ | $R_7$ | $R_0$ | $R_1$ | $R_2$ | $R_3$ | $\overline{R_4}$ | $R_5$ | $R_6$ | $R_7$ |

$x_1'$

**Fig.10** | $R_0$ | $R_1$ | $R_2$ | $R_3$ | $R_4$ | $R_5$ | $R_6$ | $R_7$ | ← R

$g_2$

$x_2'$

**Fig.11**

$D_2$  $R_D$

| $R_0$ | $R_1$ | $R_2$ | $R_3$ | $R_4$ | $R_5$ | $R_6$ | $R_7$ | $R_0$ | $R_1$ | $R_2$ | $R_3$ | $\overline{R_4}$ | $R_5$ | $R_6$ | $R_7$ |

$x_2'$

## Fig.12

E52 — $x',r$

E54 — $R$

E56 — $R_{Di}$

E58 — $R_D$

E60 — $g \leftarrow (R \!>\!> (x' \bmod 8)) \,\&\, 1$

E62 — $D \leftarrow (R_D[x' \!>\!> 3] \!>\!> (x' \bmod 8)) \,\&\, 1$

E64 — $u_6 \leftarrow x' \oplus D$

E66 — $u_7 \leftarrow mu_6$

E68 — $u_8 \leftarrow r \oplus g$

E70 — $mu_8$

E72 — $p_a \leftarrow u_7 \oplus mu_8$

E74 — $p_a^{-1}$

E76 — $u_9 \leftarrow D \oplus u_8$

E78 — $m^{-1}u_9$

E80 — $u_{10} \leftarrow m^{-1}u_9 \oplus p_a^{-1}$

E82 — $I \leftarrow mu_{10}$

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 2296307 A1